# EUROPÄISCHE PATENTSCHRIFT

(11) **EP 1 918 137 B1**
(45) Veröffentlichungstag und Bekanntmachung des Hinweises auf die Patenterteilung: **18.08.2010**
(21) Anmeldenummer: 07119778.4
(22) Anmeldetag: 31.10.2007
(51) Int. Cl.: B60G 17/052, B60G 9/00, B60G 11/27, B62D 53/06, B64F 1/32

(54) **Flughafenschlepper mit Luftfederung**
Airport tow vehicle with pneumatic suspension
Remorqueur d'aéroport doté d'une suspension à air

(30) Priorität: 31.10.2006 DE 102006051466
(43) Veröffentlichungstag der Anmeldung: 07.05.2008
(73) Patentinhaber: MULAG Fahrzeugwerk Heinz Wössner GmbH & Co. KG, 77728 Oppenau (DE)
(72) Erfinder: Esser, Peter, 73104 Börtlingen (DE)
(74) Vertreter: Alber, Norbert

(56) Entgegenhaltungen:
- EP-A- 1 022 168
- EP-A- 1 258 406
- EP-A- 1 329 351
- EP-B- 0 954 453
- DE-C1- 19 845 925
- FR-A- 2 529 838
- GB-A- 940 684
- GB-A- 2 095 967
- GB-A- 2 222 120

## Beschreibung

### I. Anwendungsgebiet

Die Erfindung betrifft Schlepper, insbesondere solche Schlepper, wie sie auf dem Flughafenvorfeld zum Ziehen von Gepäckwägen, Gangways, Hubplattformen und ähnlichem benutzt werden.

Unter einem Schlepper wird ein Fahrzeug verstanden, welches aufgrund Eigengewicht und Antriebsleistung primär zum Ziehen von Wägen dient, so dass es selbst keine Ladefläche besitzt oder zumindest nicht primär besitzt.

Zum technischen Umfeld wird beispielsweise auf die EP-A-1329351 verwiesen.

### II. Technischer Hintergrund

Derartige Schlepper weisen gegenüber anderen Fahrzeugen, auch anderen Nutzfahrzeugen, spezifische Besonderheiten auf:
- sie sind klein und besitzen dadurch eine geringe Spurbreite und geringen Achsabstand und hohen möglichen Lenkeinschlag, um sehr manövrierfähig zu sein,
- sie sind relativ schwer, häufig 5 bis 6 Tonnen Eigengewicht, um auch hohe angehängte Lasten ohne Schlupf an den Antriebsrädern ziehen und auch abbremsen zu können,
- die Bereifung besteht teilweise aus Vollgummi-Reifen und
- die Höchstgeschwindigkeit liegt relativ niedrig, meist bei ca. 30 km/h.

Auch der Untergrund, auf dem diese Schlepper fahren, ist spezifisch gestaltet:
Das Vorfeld eines Flughafens ist in der Regel prinzipiell befestigt, meist betoniert, und innerhalb der einzelnen Betonplatten so eben, dass es lediglich zu radfrequenten Mikroschwingungen im Fahrwerk kommt.

Größere Unebenheiten gibt es in der Regel nur
- in Form der kleine Rinnen darstellenden Dehnungsfugen zwischen den einzelnen Betonplatten und vor allem
- in Form von leistenförmigen Erhebungen, so genannten Speedreducern, mit dreieckigem oder trapezförmigem Querschnitt, die vor allem schnellere Fahrzeuge auf dem Vorfeld dazu zwingen sollen, ihr Tempo in bestimmten Bereichen des Vorfeldes zu verringern.

Bisher waren Vorfeld-Schlepper mit einfachen Blattfedern, meist aus Stahl, ausgerüstet. Da diese Blattfedern das hohe Eigengewicht des Schlepperaufbaus aufnehmen können mussten und auch die Seitenneigung begrenzt werden musste, war diese passive Federung so hart ausgelegt, dass vor allem bei einem Überfahren der Speedreducer mit annähernd 30 km/h sehr harte vertikale Schläge in den Aufbau des Fahrzeuges eingebracht wurden.

Gleiches gilt für Schläge in Längsrichtung beim Anfahren und Abbremsen des Schleppers mit angehängter Last. Diese harten Schläge führen einerseits zu Schäden am Fahrzeug, insbesondere der Fahrzeugelektrik und -elektronik, und sind andererseits für den auf dem Fahrzeug sitzenden Fahrer auf die Dauer sehr ungesund, da selbst von dem gefederten Fahrersitz diese Schläge nur teilweise aufgenommen werden.

Darüber hinaus sind auch luftgefederte Fahrwerke auch bei Nutzfahrzeugen, z. B. Sattelzugmaschinen, etwa aus der EP 0954453 B1, bekannt, jedoch nicht für die gattungsgemäßen Vorfeld-Schlepper.

### III. Darstellung der Erfindung

### a) Technische Aufgabe

Es ist daher die Aufgabe gemäß der Erfindung, eines gattungsgemäßen Schleppers mit luftgefedertem Fahrwerk zu schaffen, die trotz der vorhandenen Randbedingungen bei solchen Schleppern das Fahr- und Federungsverhalten verbessert.

### b) Lösung der Aufgabe

Diese Aufgabe wird durch die Merkmale der Ansprüche 1 und 13 gelöst. Vorteilhafte Ausführungsformen ergeben sich aus den Unteransprüchen.

Neben der Stahlfederung mittels Blatt- oder Schraubenfedern sind als höherwertige Federungen im Fahrzeugbau die hydropneumatische Federung und die Luftfederung bereits bekannt.

Da bei einem Schlepper weder eine Niveauregulierung benötigt wird noch die meisten Schlepper überhaupt ein Hydrauliksystem enthalten, wurde hiervon nicht die hydropneumatische Federung, sondern die Luftfederung gewählt, und zwar im Gegensatz zu der vorherrschenden Meinung, dass solche höherwertigeren Federungssysteme den Einsatz erst im Falle sehr unterschiedlicher Fahr- und Untergrundkonstellationen rechtfertigen:
Zwar sind die Fahr- und Untergrundsituationen bei Vorfeld-Schleppern auf dem Flughafen relativ genau vorhersehbar, jedoch die dabei auftretenden Extreme zueinander so unterschiedlich, dass nur die Luftfederung auch für sehr kleine Zeitfenster bedarfsgerechte, fahrzustandsabhängige Vertikalkräfte zwischen Rad und Aufbau bereitstellen kann, um den ansonsten vorhandenen Zielkonflikt zwischen Fahrverhalten und Fahrkomfort aufzulösen.

Im einfachsten Fall umfasst die Luftfederung einzelne Federbälge, die mit einem bestimmten Druck gefüllt und verschlossen sind, der während des Fahrbetriebs nicht verändert wird und folglich auch kein Ausgleichsvolumen oder keinen Kompressor im Schlepper benötigt. Lediglich in größeren zeitlichen Abständen wird das Vorhandensein des Nenndruckes überprüft und dieser Nenndruck gegebenenfalls - wenn Verluste aufgetreten sind - auf den Sollwert erhöht.

Bereits hierdurch kann ein Zugewinn an Komfort erreicht werden, da gegenüber einer Stahlfeder das Ansprechverhalten der Federung wesentlich verbessert werden kann, beispielsweise durch Festlegen einer anderen, dynamischeren Federkennlinie als dies bei Stahlfedern möglich wäre.

Wenn die Luftfederung zusätzlich die Möglichkeit bietet, den Druck in den einzelnen Federbälgen während des Fahrbetriebes zu verändern, und sei es auch nur manuell, indem ein Kompressor oder ein Ausgleichsbehälter mit höherem Druck Druckluft nachliefern kann.

Wenn die Luftfederung eine Steuerung, meist eine elektronische Steuerung, enthält, die durch Befüllen und Entlüften den Druck in den einzelnen Federbälgen sehr kurzfristig, auch im Millisekundenbereich, steuert, so können hierdurch Anpassungen des Federdruckes in Abhängigkeit von der Anhängelast, der gewünschten Fahrgeschwindigkeit, der Untergrundbeschaffenheit usw. kurzfristig eingestellt werden.

Während eine Befüllung und damit Druckerhöhung im Federbalg mittels Kompressors relativ langsam vorgeht und mehrere Sekunden dauert, kann die Befüllung aus einem mit Überdruck befüllten Ausgleichsbehälter und ein entsprechend groß dimensioniertes Verbindungsventil beinahe schlagartig und im Millisekundenbereich vorgenommen werden. Gleiches gilt für das Entlüften in die Umgebung.

Auf diese Art und Weise kann die Federung für Normalfahrt, also innerhalb einer in der Regel sehr ebenen Betonplatte des Vorfeldes, so ausgelegt sein, dass sie lediglich Mikroschwingungen, wie sie primär radfrequent auftreten, federt, oder selbst deren Abfederung der Eigenfederung des Rades überlässt.

Dagegen kann die Steuerung spezielle Federungs-Verhaltensweisen in Form von Kennfeldern oder Kennlinien enthalten, die auf die vorhandenen Unebenheiten, typischerweise die Speedreducer einerseits und die Dehnungsfugen andererseits, optimal abgestimmt sind, und insbesondere sogar auf deren spezielle Form und Größe auf dem jeweiligen Vorfeld abgestimmt sein können.

Nicht bekannt ist dagegen der Zeitpunkt des Auftreffens eines Rades auf diesen Unebenheiten sowie andere fahrdynamische Parameter wie Anfahrwinkel, Geschwindigkeit, Größe der am Schlepper angehängten Last, Lenkeinschlag usw.

Der Zeitpunkt des Auftreffens des Rades auf einer solchen Unebenheit kann prinzipiell auf zwei verschiedene Arten ermittelt werden:
- Entweder indem die durch die Unebenheit bewirkte beginnende Einfederung des Federbalges detektiert wird, also der dadurch bedingte Druckanstieg im Federbalg und daraufhin die Steuerung den restlichen Federungsvorgang aktiv beeinflusst; oder
- indem die Unebenheit bereits vor dem Kontakt mit dem Rad detektiert wird, beispielsweise durch optische, in Fahrtrichtung vorausschauende, Sensoren, mit deren Hilfe gerade die auf der sonst ebenen Vorfeldfläche deutlich aufragenden Speedreducer bei ausreichend tiefer Montage auch mit sehr einfachen optischen Sensoren gut erkannt werden können. Zusätzlich zum Zeitpunkt des Auftretens der Unebenheit kann dadurch auch die Art der Unebenheit detektiert werden, und dadurch nicht nur der Beginn des aktiven Steuerungsvorganges der Federung initiiert werden, sondern auch das zu durchlaufende Federungsverhalten.

Dessen spezifische Gestalt wird jedoch durch die vorerwähnten anderen fahrdynamischen Faktoren mitbeeinflusst, weshalb die Qualität des erzielten Federungsverhaltens, also der Grad der Optimierung des Federungsablaufes relativ zur zu bewältigenden Situation, davon abhängt, wie viele der übrigen fahrdynamischen Parameter, vorzugsweise in der Reihenfolge Fahrgeschwindigkeit, Lenkwinkel, Anhängelast, Beschleunigung, einzeln bekannt und von der Steuerung berücksichtigt werden.

Weiterhin müssen aufgrund der spezifischen Besonderheiten bei einer Luftfederung in derartigen Schleppern auch mechanische Details spezifisch gestaltet werden:
Wegen des hohen Eigengewichts des Fahrzeuges und der geringen Spurbreite sind Längs-Führungslenker, wie sie ansonsten im Nutzfahrzeugbau bei Luftfederungen verwendet werden, alleine nicht ausreichend, sondern müssen vorzugsweise durch Quer-Führungslenker ergänzt werden, oder die Wirkrichtung der Luftfederbälge muss schräg nach unten außen geneigt vorgesehen werden, um eine ausreichende Querabstützung für das Verhindern der Seitenneigung des Aufbaus zu gewährleisten. Auch eine zusätzlich in Längsrichtung wirkende Drehmomentstütze, die mit jeweils einer der Anhängekupplungen verbunden ist, ist sinnvoll, um hierdurch die in die Anhängekupplung beim Bremsen und Beschleunigen eingebrachten Längskräfte der ungebremsten Anhänger zumindest teilweise über die Luftfederung aufnehmen zu können, und nicht als Längsbeschleunigungen in den Aufbau einzuleiten.

Da auf jedem Flugfeld sehr spezifische Unebenheiten, also z. B. Speedreducer einer bestimmten Flankenneigung und Höhe, am Schlepper ein bestimmter Raddurchmesser usw. vorliegen, können einzelne typische Fahrsituationen geprobt und mittels einer lernfähigen Steuerung auch eigenständig optimiert werden, wozu beispielsweise Beschleunigungssensoren am Aufbau des Schleppers dienen, die die tatsächlich in den Aufbau eingeleiten Beschleunigungskräfte messen und dadurch eine eigenständige Optimierung des Federungsverhaltens durch die Steuerung ermöglichen.

Zur Führung des Achskörpers oder auch des Achsschenkels dienen vorzugsweise je ein in Fahrzeuglängsrichtung verlaufender Längslenker und ein schräg zwischen Längs- und Querrichtung verlaufender Schräglenker, von denen zumindest einer möglichst tief am Achskörper oder Achsschenkel ansetzt, während sich die Luftfederbälge zwischen dem Achskörper bzw. Achsschenkel und der Unterseite des Chassis befinden und diesen abstützen.

Bei Lösungen mit einem von der einen zur anderen Seite durchgehenden Achskörper kann die Längsführung durch einen einzigen zentralen Längslenker angreifend am Achskörper realisiert werden.

### c) Ausführungsbeispiele

Ausführungsformen gemäß der Erfindung in Form von Fahrwerkskonstruktionen, na denen die erfindungsgemäße, elektronisch gesteuerte Luftfederung realisiert sein kann, sind im Folgenden beispielhaft näher beschrieben. Es zeigen:

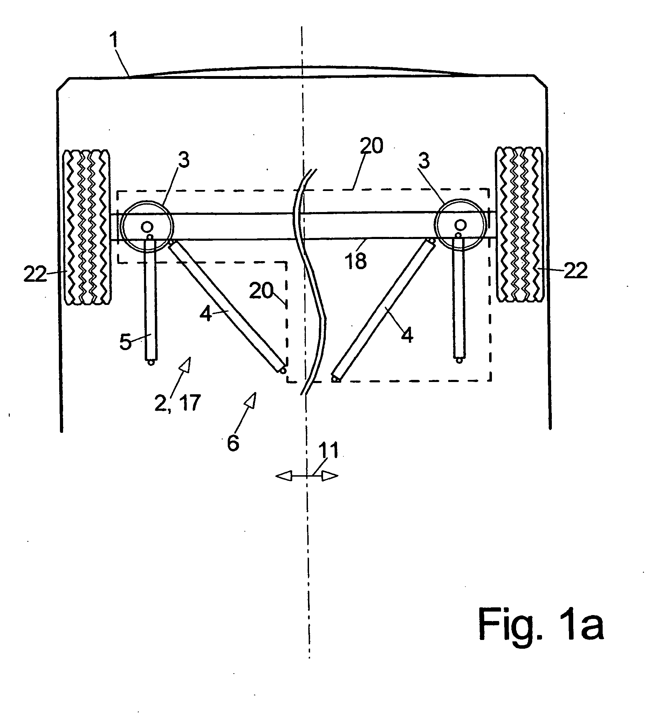

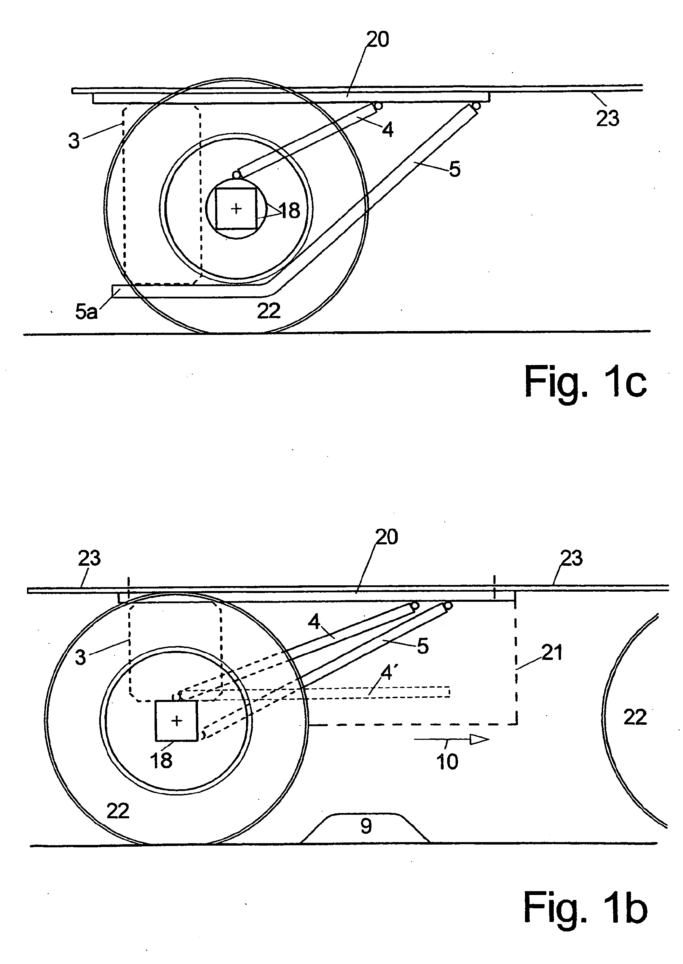

- Fig. 1 a:: eine insbesondere nicht lenkbare luftgefederte Achse in der Aufsicht
- Fig. 1b:: und Seitenansicht,
- Fig. 1 c:: die Aufhängung des Achskörpers 18,
- Figuren 2:: ein lenkbares luftgefedertes Rad betrachtet in Fahrrichtung.

Fig. 1a zeigt in der Aufsicht eine Achse eines Fahrwerks (2), die trotz Luftfederung über einen in Querrichtung 11 zur Fahrtrichtung 10 verlaufenden durchgehenden, starren Achskörper 18 verfügt:
An den Enden des Achskörpers 18 sind die Räder 22 drehbar gelagert, wobei es sich bei den Rädern üblicherweise um ganze Radbaugruppen, also einschließlich der Bremsen, handelt.

Dabei handelt es sich um eine nicht lenkbare Achse, z. B. eine Hinterachse.

Wie die Seitenansicht der Achsbaugruppe gemäß Fig. 1a in Fig. 1b zeigt, befinden sich die beiden Luftfederbälge 3 zwischen dem Achskörper 18 und einem Grundkörper 20 der Achsbaugruppe, welche insbesondere als plattenförmiges Teil der Verschraubung der gesamten Baugruppe an der Unterseite des Chassis 23 dient. Wie Fig. 1b zeigt, ist jeder der beiden Luftfederbälge dabei direkt zwischen der Oberseite des Achskörpers 18 und der Unterseite des Grundkörpers 20 befestigt, und zwar gemäß Fig. 1a jeweils nahe der äußeren Enden des Achskörpers 18 und damit nahe der Räder 22.

Da aufgrund der Elastizität der Federbälge 3 dabei das Rad sowohl nach vorne und hinten als auch nach links und rechts verlagert werden könnte, bedarf es einer Längs- und Querführung in Form von Längsführungslenkern 5 und Querführungslenkern 4, die an den Enden des Achskörpers 18, also nahe an den Rädern, angreifen. Dabei verläuft der Längsführungslenker 5 in Fahrtrichtung zur Fahrzeugmitte hin und ist dabei vorzugsweise nicht am Chassis 23, sondern an der Unterseite des Grundkörpers 20 befestigt und steigt deswegen schräg nach oben an.

Die Querführungslenker 4 führen in Aufsicht betrachtet entweder in Querrichtung, vorzugsweise jedoch schräg zur Längsachse verlaufend zur Fahrzeuglängsachse und sind dort am Grundkörper und damit knapp unterhalb des Chassis 23 angelenkt oder deutlich tiefer liegend an dem vom Grundkörper 20 in Längsrichtung verlaufend nach unten ragenden Schwert 21 (Querführungslenker 4').

Fig. 1b zeigt auch den auf dem Untergrund aufgebrachten Speedreducer 9 in Form einer Schwelle kurz vor dem Auflaufen des Rades 22 auf diesen Speedreducer.

Fig. 1c zeigt als Alternative zur Fig. 1b die Aufhängung des Achskörpers 18, der hier einen runden Querschnitt besitzt, in einer wiederum beidseits nahe der Räder angeordneten Schwinge am Grundkörper 22, wobei die Schwinge gleichzeitig der Längsführungslenker 5 ist, der in Fahrzeuglängsrichtung verläuft. Der Längsführungslenker 5 ist über den Achskörper 128 hinaus mit einem freien Ende 5a verlängert, welches zum Aufsetzen des Luftfederbalges 3 zwischen diesem verlängerten Ende 5a und dem plattenförmigen Grundkörper 20 unter dem Chassis 23 dient.

Dabei ist ersichtlich, dass auf diese Art und Weise deutlich höhere Luftfederbälge eingesetzt werden können, ohne die Fahrzeughöhe zu vergrößern.

Die Schwinge dient dabei gleichzeitig als Längsführungslenker 5, während die Querführungslenker 4 in Querrichtung verlaufend oder schräg zur Querrichtung 11 verlaufend zusätzlich am Achskörper 18 angreifen, wie anhand der Fig. 1a und 1 b erläutert.

Aus diesen Figuren ist ersichtlich, dass auf diese Art und Weise die gesamte Achsbaugruppe vormontiert werden kann und zur Montage am Chassis lediglich der Grundkörper 20 am Chassis verschraubt werden muss und damit die Montage deutlich schneller vonstatten geht als bei Einzelradaufhängung.

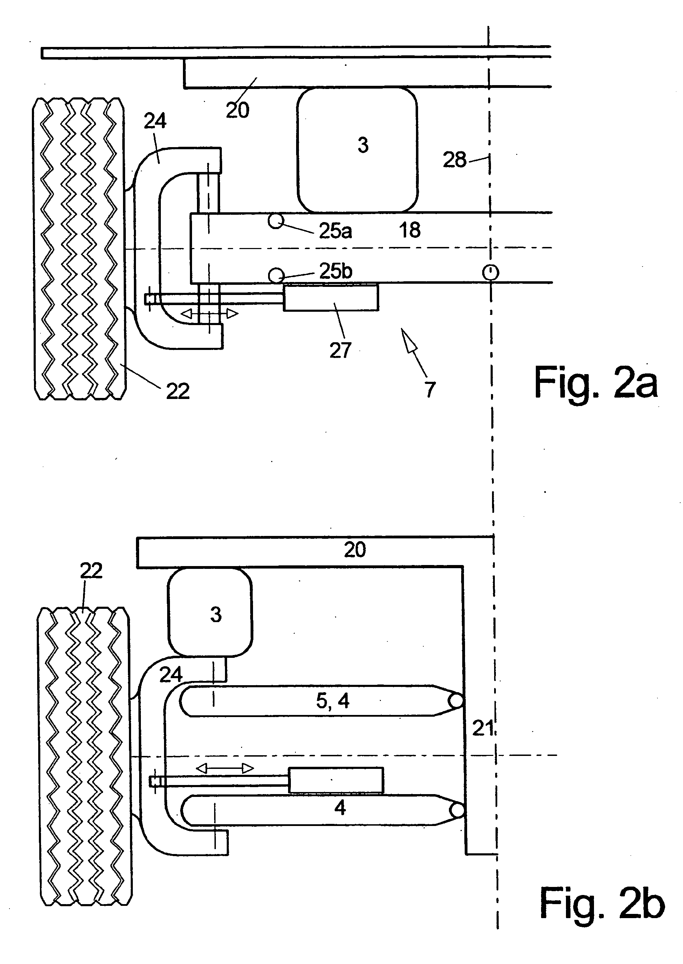

Fig. 2a zeigt eine Seite einer Achsbaugruppe, jedoch in Ausbildung für eine lenkbare Baugruppe beispielsweise eine Vorderachse 7:
Dabei ist in Fig. 2a der wie üblich C-förmige Achsschenkel 25 um eine aufrecht stehende Achse relativ zum Ende des Achskörpers 18 gelagert, den er teilweise umgreift. Vom Achsschenkel 24 etwas nach innen versetzt sitzt auf dem Achskörper 18 oder - siehe Fig. 1c - vor dem Achskörper 18 - der Luftfederbalg 3 zwecks Abstützung am Grundkörper 20.

In Fig. 2a sind auch die Aufnahmepunkte 25a,b am unteren und oberen Ende des Querschnittes des Achskörpers 18 für die Längs- und Führungslenker 5 zu sehen. Dabei ist auch ein Aufnahmepunkt 25a für den Längsführungslenker direkt auf der Längsmitte 28 zu sehen für den Fall, dass der gesamte Achskörper 18 nur über einen einzigen, mittig angeordneten Längsführungslenker abgestützt wird.

Am Achsschenkel 24 ist ferner der exzentrisch zur Achsschenkel-Achse angeordnete Lenkhebel 26 zu erkennen, an dem die Längsstange, beispielsweise betätigt vom Zylinder 27, angreift zwecks Auslenkung des Rades 22.

Fig. 2b zeigt eine Lösung mit Einzelradaufhängung, bei der wie bei Einzelradaufhängungen bekannt von dem oberen und unteren Ende des C-förmigen Achsschenkels 24 die Längsführungslenker und Querführungslenker, die in diesem Fall mit ihrem anderen Ende nicht direkt am Chassis, sondern an dem Grundkörper 20 der Achsbaugruppe, insbesondere dem davon als Schwert vertikal auf der Längsmitte des Fahrzeuges nach unten ragenden Schwert 21 angelenkt sind.

Am unteren Ende des Achskörpers 24 sind dabei vorzugsweise nicht nur ein Querführungslenker 4, sondern in der Aufsicht betrachtet zwei einerseits schräg nach vorn und andererseits schräg nach hinten ragende Querlenker 4 angeordnet, die somit vorzugsweise als Dreieckslenker ausgebildet sind, und in etwa horizontal verlaufen. Vorzugsweise ist am unteren Ende des oberen Endes des Achsschenkels 24 entweder ein Längslenker 5 oder wiederum zwei schräg verlaufende Querlenker 4 als Dreieckslenker angeordnet. Der Luftfederbalg 3 ist zwischen der Oberseite des Achsschenkels 24 und der Unterseite des plattenförmigen Grundkörpers 20 befestigt.

### BEZUGSZEICHENLISTE

- 1: Schlepper
- 2: Fahrwerk
- 3: Luft-Federbalg
- 4: Quer-Führungslenker
- 5: Längs-Führungslenker
- 6: Hinterachse
- 7: Vorderachse
- 9: Speedreducer
- 10: Fahrtrichtung
- 11: Querrichtung
- 17: Achsbaugruppe
- 18: Achskörper
- 20: Grundkörper
- 21: Schwert
- 22: Rad
- 23: Chassis
- 24: Achsschenkel
- 25a,b: Aufnahmepunkte
- 27: Zylinder
- 28: Längsmitte

## Patentansprüche

1. Schlepper (1) für Gepäckwägen, Gangways oder Hubplattformen auf dem Flughafenvorfeld wobei
**dadurch gekennzeichnet, dass**
- das Fahrwerk (2) des Schleppers (1) eine Luftfederung mit Luftfederbälgen (3) aufweist
- die Luftfederung ein elektronisches Steuergerät sowie zusätzliche Sensoren umfasst, und das Steuergerät den Druck in den einzelnen Federbälgen (3) abhängig von den von den Sensoren gelieferten Signalen automatisch und kurzfristig verändert, und
- das Kennfeld des Steuergerätes auf die spezifischen Untergrund-Gegebenheiten des Flughafenvorfeldes, insbesondere die Speedreducer (9) und gegebenenfalls die Dehnfugen, programmiert ist.

2. Schlepper (1) nach Anspruch 1,
**dadurch gekennzeichnet, dass**
die Sensoren Geschwindigkeits-Sensoren, Lenkwinkel-Sensoren, Seitenneigungs-Sensoren, Nick-Sensoren, Anhängelast-Sensoren, Beschleunigungs-Sensoren und/oder in Fahrtrichtung auf den Untergrund vor den vorne fahrenden Rädern gerichtete, z. B. optische Sensoren sind.

3. Schlepper nach einem der vorhergehenden Ansprüche,
**dadurch gekennzeichnet, dass**
die Luftfederung Quer-Führungslenker (4), insbesondere zusätzlich zu den LängsFührungslenkern (5), aufweist.

4. Schlepper nach einem der vorhergehenden Ansprüche,
**dadurch gekennzeichnet, dass**
der eingegebene Druck festgelegt wird in Abhängigkeit des Eigengewichts des Schleppers (1), der zulässigen Anhängelast, des Raddurchmessers und der Flankenneigung der häufigsten Bodenunebenheiten, insbesondere der Speedreducer (9).

5. Schlepper nach einem der vorhergehenden Ansprüche,
**dadurch gekennzeichnet, dass**
die Federbälge (3) mit einem im Schlepper (1) eingebauten Kompressor in Verbindung stehen, und der Druck in den Federbälgen (3) manuell verändert werden kann, insbesondere abhängig von der Anhängelast und/oder der gewünschten Fahrgeschwindigkeit.

6. Schlepper nach einem der vorhergehenden Ansprüche,
**dadurch gekennzeichnet, dass**
das Steuergerät einen Lernmodus umfasst, in dem die typischen Unebenheiten eines spezifischen Untergrundes, insbesondere bei unterschiedlichen Geschwindigkeiten, überfahren werden können, und sich die Steuerung abhängig von diesen Probefahrten selbsttätig einstellt.

7. Schlepper nach einem der vorhergehenden Ansprüche,
**dadurch gekennzeichnet, dass**
die Federbälge (3) mit einer Wirkrichtung schräg nach außen unten, insbesondere mit einem Winkel abweichend um 10 bis 20 Grad von der Vertikalen, im Fahrwerk (2) eingebaut sind.

8. Schlepper nach einem der vorhergehenden Ansprüche,
**dadurch gekennzeichnet, dass**
die Federbälge (3) einen Arbeitdruck von 0,5 Bar bis 20 Bar, insbesondere 1,0 - 10 Bar, insbesondere 3,0 - 5,0 bar, enthalten.

9. Schlepper nach einem der vorhergehenden Ansprüche,
**dadurch gekennzeichnet, dass**
die Federbälge (3) mit einem Ausgleichsbehälter, insbesondere einem zentralen Ausgleichsbehälter, verbindbar sind, indem insbesondere ein höherer Druck als der Arbeitsdruck im Federbalg (3) herrscht.

10. Schlepper nach Anspruch 9,
**dadurch gekennzeichnet, dass**
der Ausgleichsbehälter vom Kompressor gespeist und gefüllt gehalten wird und das Steuergerät die Nachspeiseventile und die Ablassventile zum Ablassen von Luft aus dem Federbalg (3) in die Umgebung steuert.

11. Schlepper nach einem der vorhergehenden Ansprüche,
**dadurch gekennzeichnet, dass**
die Luftfederbälge (3) zwischen den Enden entweder des Achskörpers (18) bei einer ungelenkten Achse oder dem Achsschenkel (24) bei einer gelenkten Achse und dem Chassis (23) angeordnet sind.

12. Schlepper nach einem der vorhergehenden Ansprüche,
**dadurch gekennzeichnet, dass**
bei einer ungelenkten Achs-Baugruppe, insbesondere Hinterachs-Baugruppe, die Befestigung des Achskörpers (18) an einem Grundkörper (20) indirekt mit Hilfe von beidseits der Längsachse des Fahrzeuges vorhandenen, in Längsrichtung verlaufenden, Schwingen erfolgt, und die Luftfederbälge (3) insbesondere auf der von der Schwinge abgewandten Seite des Achskörpers zwischen einem Fortsatz der Schwinge und dem Grundkörper (20) angeordnet sind.

13. Verfahren zum Betrieb der Luftfederung in einem Schlepper (1) auf dem Flughafenvorfeld, gemäß einem der vorhergehenden Ansprüche,
**dadurch gekennzeichnet, dass**
die Steuerung auf die spezifisch in der Arbeitsumgebung des Schleppers (1) vorkommenden Bodenunebenheiten und deren optimale Abfederung und Bedämpfung programmiert ist.

14. Verfahren nach Anspruch 13,
**dadurch gekennzeichnet, dass**
die Luftfederung für die Fahrt auf dem ebenen Untergrund sehr hart, insbesondere abhängig von der maximal zulässigen Seitenneigung bei Höchstgeschwindigkeit und Kurvenfahrt, programmiert ist und sich bei Anlaufen eines der Räder (22) an einem Speedreducer (9) ein optimal weiches Einfedern des Rades (22) um die Höhe des Speedreducers (9) vorgegeben ist.

15. Verfahren nach einem der vorhergehenden Ansprüche,
**dadurch gekennzeichnet, dass**
beim Beschleunigen und Bremsen des Schleppers (1) die von der angehängten Last in die Anhängekupplung eingeleiteten Kräfte wenigstens teilweise von der Luftfederung kompensiert werden.

## Claims

1. A tow vehicle (1) for luggage carts, gangways or man lifts on an airport ramp, wherein
- the suspension(2) of the tow vehicle (1) comprises an air suspension with air spring bellows (3);
- the air spring suspension includes an electronic control device and additional sensors and the control device automatically and quickly changes the pressure in the particular air spring bellows (3) as a function of signals delivered by the sensors; and
- the characteristic diagram of the control device is programmed for the specific surface properties of the airport ramp, in particular the speed reducers (9) and possibly the expansion joints.

2. A tow vehicle (1) according to claim 1, wherein the sensors are speed sensors, steering angle sensors, lateral inclination sensors, pitch sensors, tow load sensors, acceleration sensors and/or sensors oriented in driving direction towards the surface in front of the leading wheels, e.g. optical sensors.

3. A tow vehicle according to one of the preceding claims, wherein the air spring suspension includes transversal control arms (4), in particular in addition to the longitudinal control arms (5).

4. A tow vehicle according to one of the preceding claims, wherein the input pressure is determined as a function of the tare weight of the tow vehicle (1), the permissible tow load, the wheel diameter and the slope of the most common surface irregularities, in particular the speed reducers (9).

5. A tow vehicle according to one of the preceding claims, wherein the air spring bellows (3) are connected with a compressor installed in a tow vehicle (1) and the pressure in the air spring bellows (3) can be changed manually, in particular as a function of the tow load and/or the desired driving speed.

6. A tow vehicle according to one of the preceding claims, wherein the control device comprises a learning mode in which the typical irregularities of a specific surface can be run over, in particular for different speeds, and the control device self-adjusts as a function of the test runs.

7. A tow vehicle according to one of the preceding claims, wherein the air spring bellows (3) are installed in the suspension (2) with an effective direction slanted downward to the outside, in particular at an angle of 10-20° from the vertical.

8. A tow vehicle according to one of the preceding claims, wherein the air spring bellows (3) include an operating pressure of 0.5 bar - 20 bar, in particular 1.0 - 10 bar, in particular 3.0 - 5.0 bar.

9. A tow vehicle according to one of the preceding claims, wherein the air spring bellows (3) can be connected with an accumulator, in particular a center accumulator, in which in particular a higher pressure prevails than the operating pressure in the air spring bellows (3).

10. A tow vehicle according to claim 9, wherein the accumulator is fed and maintained full by a compressor and the control device controls the feed valves and the bleed valves for bleeding air from the air spring bellows (3) into ambient.

11. A tow vehicle according to one of the preceding claims, wherein the air spring bellows (3) are disposed either between the ends of an axle body (18) for a non-steering axle or between a steering knuckle (24) and a body (23) for a steering axle.

12. A tow vehicle according to one of the preceding claims, wherein the mounting of the axle body (18) at a base body (20) is performed indirectly through swing arms provided on both sides of the longitudinal axis of the vehicle and extending in longitudinal direction, and the air spring bellows (3) are disposed in particular on the side of the axle body facing away from the swing arm between a protrusion of the swing arm and the base body (20) for a non-steering axle assembly, in particular a rear axle assembly.

13. A method for operating the air suspension in a tow vehicle (1) on an airport ramp according to one of the preceding claims, wherein the control is programmed for the surface irregularities provided in particular in the operating environment of the tow vehicle (1) and the optimum spring rate and damping rate for the control is programmed.

14. A method according to claim 13, wherein the air spring suspension is programmed very hard for driving on an even surface, in particular as a function of a maximum permissible lateral tilt at maximum speed in a turn and an optimum soft spring compression in the amount of the height of the speed reducer (9) is predetermined when one of the wheels (22) contacts the speed reducer (9).

15. A method according to one of the preceding claims, wherein the forces introduced into the tow hook through the attached load during accelerating and braking of the tow vehicle (1) are at least partially compensated by the air spring.

## Revendications

1. Remorqueur (1) pour fourgon à bagages, passerelles ou plateformes de levage sur l'aire de trafic d'aéroport, **caractérisé en ce que**
- le châssis (2) du fourgon (1) présente une suspension pneumatique avec des soufflets de suspension (3),
- la suspension pneumatique comporte un appareil de commande électronique ainsi que des capteurs supplémentaires et l'appareil de commande modifie à cours terme et automatiquement la pression dans chacun des soufflets de suspension (3) en fonction des signaux fournis par les capteurs et
- la cartographie de l'appareil de commande est programmée sur les conditions spécifiques de sol de l'aire de trafic d'aéroport, en particulier les ralentisseurs de vitesse (9) et éventuellement les joints de dilatation.

2. Remorqueur (1) selon la revendication 1, **caractérisé en ce que** les capteurs sont des capteurs de vitesse, des capteurs d'angle de braquage, des capteurs d'inclinaison latérale, des capteurs de cassure, des capteurs de charge attelée, des capteurs d'accélération et/ou par exemple des capteurs optiques orientés dans le sens d'avance sur le sol devant les roues avant.

3. Remorqueur selon l'une des revendications précédentes, **caractérisé en ce que** la suspension pneumatique présente des bielles de guidage transversales (4) en particulier en plus des bielles de guidage longitudinales (5).

4. Remorqueur selon l'une des revendications précédentes, **caractérisé en ce que** la pression entrée est déterminée en fonction du poids propre du remorquer (1) de la charge remorquée permissible du diamètre de roue et de l'inclinaison de flanc des irrégularités de sol les plus fréquentes en particulier des ralentisseurs (9).

5. Remorqueur selon l'une des revendications précédentes, **caractérisé en ce que** les soufflets de suspension (3) sont reliés à un compresseur monté dans le remorqueur (1), et la pression peut être modifiée manuellement dans les soufflets de suspension (3), en particulier en fonction de la charge remorquée et/ou de la vitesse de marche souhaitée.

6. Remorqueur selon l'une des revendications précédentes, **caractérisé en ce que** l'appareil de commande comprend un mode d'apprentissage dans lequel les irrégularités typiques d'un sol spécifiques en particulier dans le cas de vitesses différentes peuvent être franchises et que la commande se règle automatiquement en fonction de ces essais de route.

7. Remorqueur selon l'une des revendications précédentes, **caractérisé en ce que** les soufflets de suspension (3) sont montés dans le châssis (2) avec une direction d'action inclinée vers l'extérieur en bas, en particulier avec un angle divergeant de 10 à 20 degrés de la verticale.

8. Remorqueur selon l'une des revendications précédentes, **caractérisé en ce que** les soufflets de suspension (3) comportent une pression de travail comprise entre 0,5 bar et 20 bars, en particulier 1,0 et 10 bars, en particulier 3,0 et 5,0 bars.

9. Remorqueur selon l'une des revendications précédentes, **caractérisé en ce que** les soufflets de suspension (3) peuvent être reliés à un réservoir d'expansion, en particulier à un réservoir d'expansion central dans lequel règne en particulier une pression plus élevée que la pression de travail dans le soufflet de suspension (3).

10. Remorqueur selon la revendication 9, **caractérisé en ce que** le réservoir d'expansion est alimenté et maintenu plein par le compresseur et l'appareil de commande commande les soupanes d'alimentation et les soupapes de purge pour la purge de l'air hors du soufflet de suspension (3) dans l'environnement.

11. Remorqueur selon l'une des revendications précédentes, **caractérisé en ce que** les soufflets de suspension (3) sont disposés entre les extrémités soit du corps d'essieu (18) pour un essieu non articulé ou une fusée d'essieu (24) pour un essieu articulé et le châssis (23).

12. Remorqueur selon l'une des revendications précédentes, **caractérisé en ce que** pour un composant d'essieu non articulé en particulier le composant d'essieu arrière, la fixation du corps d'essieu (18) s'effectue sur un corps de base (20) indirectement à l'aide d'ailes s'étendant de part et d'autres de l'axe longitudinal du véhicule dans le sens longitudinal et les soufflets de suspension (3) sont disposés en particulier sur la face du corps d'essieu, détournée de l'aile, entre un prolongement de l'aile et le corps de base (20).

13. Procédé pour le fonctionnement de la suspension pneumatique dans un remorqueur (1) sur une aire de trafic d'aéroport, selon l'une des revendications précédentes, **caractérisé en ce que** la commande est programmée sur les irrégularités de sol se trouvant spécifiquement dans l'environnement de travail du remorqueur (1) à leur amortissement et suspension optimale.

14. Procédé selon la revendication 13, **caractérisé en ce que** la suspension pneumatique est programmée pour un trajet sur le sol plan très dur, en particulier en fonction de l'inclinaison latérale admissible maximale pour des vitesses maximales et un trajet en courbe et un amortissement optimal doux de la roue (22) est prédéterminé lors de la montée d'une des roues (22) sur un ralentisseur (9) de l'équivalent de la hauteur du ralentisseur (9).

15. Procédé selon l'une des revendications précédentes, **caractérisé en ce qu'**en cours d'accélération ou de freinage du remorqueur (1), les forces appliquées dans l'attelage de remorque par la charge remorquée sont au moins compensées partiellement par la suspension pneumatique.
